# EUROPÄISCHE PATENTSCHRIFT

(11) **EP 1 310 026 B1**
(45) Veröffentlichungstag und Bekanntmachung des Hinweises auf die Patenterteilung: **11.03.2009**
(21) Anmeldenummer: 01957755.0
(22) Anmeldetag: 06.08.2001
(51) Int. Cl.: H02B 13/035

(54) **GASISOLIERTE SCHALTANLAGE MIT DREIPHASIGEM SAMMELSCHIENENSYSTEM**
GAS-INSULATED SWITCHGEAR COMPRISING A THREE-PHASE BUS BAR
INSTALLATION DE COMMUTATION A ISOLEMENT GAZEUX A SYSTEME DE BARRES BUS TRIPHASE

(30) Priorität: 14.08.2000 DE 10041315
(43) Veröffentlichungstag der Anmeldung: 14.05.2003
(73) Patentinhaber: SIEMENS AKTIENGESELLSCHAFT, 80333 München (DE)
(72) Erfinder: AFFOLDER, Thilo, 63071 Offenbach (DE); BERTZ, Klaus, 67593 Westhofen (DE); BEYER, Andreas, 63755 Alzenau (DE); BICKEL, Klaus, 61350 Bad Homburg (DE); HOHMANN, Stefan, 36100 Petersberg (DE); JUNG, Wolfgang, 60316 Frankfurt (DE); KANNENBERG, Klaus-Peter, 63065 Offenbach (DE); MEYER, Jens, 60386 Frankfurt (DE); RITTER, Edgar-Hartmut, 61118 Bad Vilbel (DE); SCHMITT, Peter, 63069 Offenbach (DE); SIEGERT, Peter, 65520 Bad Camberg (DE); KRESS, Claus, 36093 Künzell (DE)
(86) Internationale Anmeldenummer: PCT/DE2001/002985
(87) Internationale Veröffentlichungsnummer: WO 2002/015352

(56) Entgegenhaltungen:
- EP-A- 0 291 762

## Beschreibung

Die Erfindung betrifft eine gasisolierte Schaltanlage mit Sammelschienen eines dreiphasigen Sammelschienensystems, insbesondere der Mittelspannungstechnik, sowie mit einer der Anzahl der zu schaltenden Pole entsprechende Zahl von über Trennschalter steuerbaren Leistungsschaltern und Feld- oder Kabelanschlüssen

Gasisolierte Schaltanlagen der eingangs definierten Art sind u. a. aus der Firmendruckschrift der Siemens AG, "Mittelspannungsanlagen", Katalog HA 35.11, Seiten 16,17 und 21 bekannt. Die Sammelschienen sind hier sowohl in den Einfachsammelschienen-Anlagen als auch in den Doppelsammelschienen-Anlagen in jeweils separaten hintereinanderliegenden Gasräumen angeordnet, die ihrerseits jeweils mit einem weiteren darunter liegenden Gasraum für den jeweiligen Trenn- und Leistungsschalter in Verbindung stehen. Je nach Bedarf sind die Schaltanlagen mit den Leistungsschaltern zum Anschluss von Feld- oder Kabelverbindungen vorgesehen.

Darüber hinaus ist aus der DE 198 09 839 A1 ebenfalls eine gasisolierte Schaltanlage mit gasgefüllten Behältern bekannt, in denen jeweils mehrere Sammelschienen mit ihren Dreistellungsschaltern in einem einzigen Behälter untergebracht sind. Die darunter liegenden Leistungsschalter, die in gleicher Weise mehrfach in einem weitern Gasbehälter angeordnet sind, sind mit den Sammelschienen über sogenannte gasdichte Modulkupplungseinrichtungen elektrisch leitend verbunden, wobei die Zahl der Modulkupplungseinrichtungen sich an der Anzahl der zuschaltenden Pole orientiert. Die Schaltanlagen mit mehreren Schaltfeldern sind mit den Modulkupplungseinrichtungen modular strukturiert aufgebaut.

Die der Erfindung zugrunde liegende Aufgabe besteht darin, den Grad der Modularisierung für derartige gasisolierte Schaltanlagen wesentlich zu erhöhen und gleichzeitig eine Absenkung des Volumenbedarfs zu erreichen. Dabei soll insbesondere die Erweiterbarkeit der Schaltanlagen vereinfacht und die Gasarbeiten beim Austausch von einzelnen Funktionselementen auf ein Minimum begrenzt sein.

Erfindungsgemäß wird dies durch die Merkmale
1.1 jedes Sammelschienensystem ist in einem hermetisch abgeschlossenen Sammelschienenmodul innerhalb eines Sammelschienenraumes der Schaltanlage untergebracht,
1.2 die Sammelschienen sind im Sammelschienenmodul waagerecht und senkrecht im Außenbereich desselben angeordnet,
1.3 das Sammelschienenmodul ist zur Felderweiterung mit Schraubkupplungen verbindbar,
1.4 jeder Leistungsschalter ist innerhalb der Schaltanlage in einem Leistungsschaltermodul untergebracht,
1.5 jedes Sammelschienenmodul ist mit dem entsprechenden Leistungsschaltermodul mittels einer Modulkupplung elektrisch leitend verbunden,
erreicht.

Mit der kompakten, dreieckförmigen Anordnung der Sammelschienen in dem hermetisch abgeschlossenen Sammelschienenmodul ist der Raumbedarf für die Unterbringung der Sammelschienen im gemeinsamen Sammelschienenraum der Schaltanlage praktisch auf ein Mindestmaß reduziert. Gegenüber den bekannten Schaltanlagen ist bzw. sind die Schaltfelder dadurch wesentlich verkürzt und somit ein entsprechen geringeres Bauvolumen erforderlich.

Darüber hinaus ist der Aufwand bezüglich des Austausches des hermetisch abgeschlossenen Sammelschienenmoduls im Störungsfall erheblich vereinfacht und somit die Zeit der Unterbrechung für die Energieversorgung und -verteilung merklich reduziert.

Mit der Verwendung von Schraubkupplungen können die Schaltanlagen im Bedarfsfall ohne zusätzlichen Aufwand in einfacher Weise erweitert werden.

Bei den Doppel-Sammelschienensystemen gemäß Patentanspruch 2 treten diese und weitere Vorteile gegenüber den bekannten Schaltanlagen verstärkt auf. Denn das Doppel-Sammelschienensystem selbst ist aus zwei spiegelbildlich zueinander angeordneten Sammelschienenmodulen annähernd gleicher Bauart gebildet, die ebenfalls jeweils hermetisch abgeschlossen und innerhalb des Sammelschienenraumes der Schaltanlage verschachtelt, angeordnet sind. Durch den Einsatz der einzelnen verschweißten, hermetisch abgeschlossenen Sammelschienenmodule ist im Zusammenhang mit den flexibel einsetzbaren Schraubkupplungen die Erweiterung der Schaltanlage durch hinzufügen zusätzlicher Schaltfelder ohne eine außer Betriebnahme der Schaltanlage ermöglicht.

Mit der verschachtelten Zuordnung der ansonsten spiegelbildlich zueinander angeordneten Sammelschienenmodule können darüber hinaus die Antriebs - Kinematiken der mit den Sammelschienen funktionell verknüpften Dreistellungsschalter für beide Sammelschienenmodule gleichartig ausgestattet und von der Frontseite der Schaltanlage bedient werden.

Mit der gleichen Zuordnung der Sammelschienenmodule kann das Leistungsschaltermodul für Längskupplungen in Einfachsammelschienensystemen auch für Längs- und Querkuppelfeder für Doppelsammelschienensysteme eingesetzt werden. Dies bewirkt deutliche Reduzierung von Anlagenvarianten. Daraus resultiert darüber hinaus eine rationelle kostengünstige Fertigung.

Die Erfindung wird durch ein figürlich dargestelltes Ausführungsbeispiel näher erläutert, wobei die
- Figur 1: die gasisolierte Schaltanlage mit den erfindungswe- sentlichen Bestandteilen in der Seitenansicht dar- stellt und die
- Figur 2: die Forderansicht der gleichen Anlage zeigt.

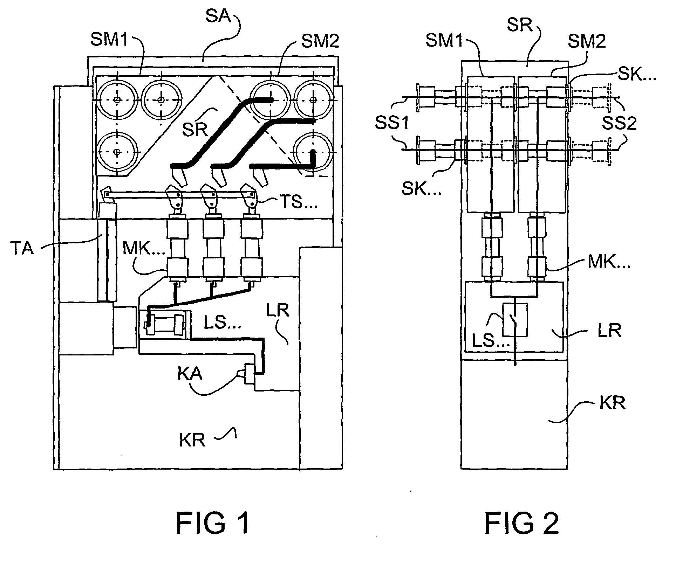

In der Seitenansicht der Fig. 1 ist die gasisolierte Schaltanlage mit einem dreiphasigen Doppelsammelschienensystem dargestellt, das im gemeinsamen Sammelschienenraum SR mit den spiegelbildlich gegenüberliegenden, verschachtelt angeordneten Sammelschienenmodulen SM1 und SM2 ausgestattet ist. In dieser Darstellung ist besonders deutlich erkennbar, dass der Platzbedarf der nicht bezeichneten Sammelschienen innerhalb der Sammelschienenmodule im Sammelschienenraumes SR sehr gering ist.

Im gemeinsamen Sammelschienenraum SR, der nach oben hin durch die Sammelschienenabdeckung SA gasdicht verschlossen ist, sind in bekannter Weise die allgemein als Dreistellungsschalter ausgeführten Trennschalter TS... untergebracht, die von dem gemeinsam zugeordneten Trennerantrieb TA gesteuert werden.

In dem sich unmittelbar darunter anschließenden Leistungsschalterraum LR sind die Leistungschaltermodule LS... vorgesehen, die mit den entsprechenden Trennschaltern TS... mittels der den Polen zugeordneten Modulkupplungen MK... elektrisch leitend verbunden sind.

Weiterhin ist angedeutet, dass die Ausgänge der Leistungsschaltermodule LS... über die entsprechenden Kabelanschlüsse KA in den Kabelanschlussraum KR geführt sind, von dem aus die nicht dargestellten Feld- bzw. Kabelanschlüsse installiert sind.

Aus der Figur 2, die eine annähernd durchsichtige Forderansicht der Schaltanlage erkennen lässt, sind besonders die Sammelschienen SM1 und SM2 dargestellt, die seitlich bedarfsweise mit den Schraubkupplungen SK... zur Felderweiterung mit den ersten und zweiten Sammelschienen SS1,2 verbindbar sind. Darüber hinaus ist die funktionelle Aufteilung der Schaltanlage in Sammelschienenraum SR, Leistungsschalterraum LR und Kabelanschlussraum KR besonders herausgestellt und die parallele elektrische Verbindung der beiden Sammelschienenmodule SM1,2 mit dem einzig zugehörigen Leistungsschaltermodul LS... beim Doppel-Sammelschienensystem durch die Modulkupplungen MK... erkennbar.

## Patentansprüche

1. Gasisolierte Schaltanlage mit Sammelschienen eines dreiphasigen Sammelschienensystems, insbesondere der Mittelspannungstechnik, sowie mit einer der Anzahl der zu schaltenden Pole entsprechende Zahl von über Trennschalter steuerbaren Leistungsschaltern und Feld- oder Kabelanschlüssen,
**gekennzeichnet durch** die Merkmale
1.1 jedes Sammelschienensystem ist in einem hermetisch abgeschlossenen Sammelschienenmodul (SM1,2) innerhalb eines Sammelschienenraumes (SR) der Schaltanlage untergebracht,
1.2 die Sammelschienen sind im Sammelschienenmodul (SM1,2) waagerecht und senkrecht im Außenbereich desselben angeordnet,
1.3 das Sammelschienenmodul (SM1,2) ist zur Felderweiterung mit Schraubkupplungen (SK...) verbindbar,
1.4 jeder Leistungsschalter ist innerhalb der Schaltanlage in einem Leistungsschaltermodul (LS...) untergebracht,
1.5 jedes Sammelschienenmodul (SM1,2) ist mit dem entsprechenden Leistungsschaltermodul (LS...) mittels einer Modulkupplung (MK...) elektrisch leitend verbunden.

2. Gasisolierte Schaltanlage mit Sammelschienen eines dreiphasigen Doppel-Sammelschienensystems, insbesondere der Mittelspannungstechnik, sowie mit einer der Anzahl der zu schaltenden Pole entsprechende Zahl von über Trennschalter steuerbaren Leistungsschaltern und Feld- oder Kabelanschlüssen,
**gekennzeichnet durch** die Merkmale
2.1 das Doppel-Sammelschienensystem ist aus zwei spiegelbildlich zueinander angeordneten Sammelschienenmodulen (SM1, SM2)gebildet, die jeweils hermetisch abgeschlossen und innerhalb eines Sammelschienenraumes (SR) der Schaltanlage verschachtelt, untergebracht sind,
2.2 die Sammelschienen sind im Sammelschienenmodul (SM1,2) waagerecht und senkrecht im Außenbereich desselben angeordnet,
2.3 das Sammelschienenmodul (SM1,2) ist zur Felderweiterung mit Schraubkupplungen (SK...) verbindbar,
2.4 jeder Leistungsschalter ist innerhalb der Schaltanlage in einem Leistungsschaltermodul (LS...) untergebracht,
2.5 jedes Sammelschienenmodul (SM1,2) ist mit dem entsprechenden Leistungsschaltermodul (LS...) mittels einer Modulkupplung (MK...) elektrisch leitend verbunden.

3. Gasisolierte Schaltanlage nach Patentanspruch 1 oder 2,
**gekennzeichnet durch** das Merkmal
3.1 die Leistungsschaltermodule (LS...) sind in einem gemeinsamen Leistungsschalterraum (LR) der Schaltanlage angeordnet.

## Claims

1. Gas-insulated switchgear assembly having busbars for a three-phase busbar system, in particular for medium-voltage technology, and having a number of power breakers, which can be controlled via switch disconnectors, and section or cable connections corresponding to the number of poles to be switched,
**characterized by** the following features:
1.1 each busbar system is accommodated in a hermetically sealed busbar module (SM1,2) within a busbar area (SR) of the switchgear assembly,
1.2 the busbars are arranged horizontally and vertically in the outer area of the busbar module (SMl,2),
1.3 the busbar module (SM1,2) can be connected to screw couplings (SK...) for section enlargement,
1.4 each power breaker is accommodated in a power breaker module (LS...) within the switchgear assembly,
1.5 each busbar module (SM1,2) is electrically conductively connected to the corresponding power breaker module (LS...) by means of a module coupling (MK...).

2. Gas-insulated switchgear assembly having busbars for a three-phase double busbar system, in particular for medium-voltage technology, and having a number of power breakers, which can be controlled via switch disconnectors, and section or cable connections corresponding to the number of poles to be switched, **characterized by** the following features:
2.1 the double busbar system is formed from two busbar modules (SM1, SM2) which are arranged in mirror-image form with respect to one another, are each hermetically sealed and are accommodated in interleaved form within a busbar area (SR) in the switchgear assembly,
2.2 the busbars are arranged horizontally and vertically in the outer area of the busbar module (SM1,2),
2.3 the busbar module (SM1,2) can be connected to screw couplings (SK...) for section enlargement,
2.4 each power breaker is accommodated in a power breaker module (LS...) within the switchgear assembly,
2.5 each busbar module (SM1,2) is electrically conductively connected to the corresponding power breaker module (LS...) by means of a module coupling (MK...).

3. Gas-insulated switchgear assembly according to Patent Claim 1 or 2,
**characterized by** the following feature:
3.1 the power breaker modules (LS...) are arranged in a common power breaker area (LR) in the switchgear assembly.

## Revendications

1. Installation de commutation isolée par du gaz, ayant des barres collectrices d'un système triphasé de barres collectrices, notamment de la technique en moyenne tension, ainsi qu'un nombre de disjoncteurs, pouvant être commandés par des sectionneurs, et de bornes de champ ou de câble correspondant au nombre des pôles à commuter,
**caractérisée par** les caractéristiques,
1.1 chaque système de barres collectrices est logé dans un module ( SM1, 2 ) de barres collectrices fermé de manière hermétique à l'intérieur d'une chambre ( SR ) de barres collectrices de l'installation de commutation,
1.2 les barres collectrices sont disposées dans le module ( SM1,2 ) de barres collectrices horizontalement et verticalement dans sa partie extérieure,
1.3 le module ( SM1,2 ) de barres collectrices peut être relié pour élargir le champ à des couplages ( SK..... ) vissés,
1.4 chaque disjoncteur est logé à l'intérieur de l'installation de commutation dans un module ( LS..... ) de disjoncteur,
1.5 chaque module ( SM1, 2 ) de barres collectrices est relié d'une manière conductrice de l'électricité au module ( LS.... ) de disjoncteur correspondant au moyen d'un couplage ( MK..... ) de module.

2. Installation de commutation isolée par du gaz et ayant des barres collectrices d'un système triphasé de double barres collectrices, notamment de la technique en moyenne tension, ainsi qu'un nombre de disjoncteurs, pouvant être commandés, par des sectionneurs, et de bornes de champ ou de câble correspondant au nombre des pôles à commuter,
**caractérisée par** les caractéristiques,
2.1 le système de barres collectrices double est formé de deux modules ( SM1, SM2 ) de barres collectrices disposés l'un par rapport à l'autre comme en un miroir, qui sont respectivement fermés de manière hermétique et logés en étant emboîté à l'intérieur de la chambre ( SR ) de barres collectrices de l'installation de commutation,
2.2 les barres collectrices sont disposées dans le module ( SM1,2 ) de barres collectrices horizontalement et verticalement dans sa partie extérieure,
2.3 le module ( SM1,2 ) de barres collectrices peut être relié pour élargir le champ à des couplages ( SK..... ) vissés,
2.4 chaque disjoncteur est logé à l'intérieur de l'installation de commutation dans un module ( LS..... ) de disjoncteur,
2.5 chaque module ( SM1, 2 ) de barres collectrices est relié d'une manière conductrice de l'électricité au module ( LS.... ) de disjoncteur correspondant au moyen d'un couplage ( MK..... ) de module.

3. Installation de commutation isolée par du gaz suivant la revendication 1 ou 2, **caractérisée par** la caractéristique 3.1 les modules ( LS..... ) de disjoncteur sont disposés dans une chambre ( LR ) commune de disjoncteur de l'installation de commutation.
